# EUROPÄISCHE PATENTSCHRIFT

(11) **EP 0 471 234 B1**
(45) Veröffentlichungstag und Bekanntmachung des Hinweises auf die Patenterteilung: **17.05.1995**
(21) Anmeldenummer: 91112682.9
(22) Anmeldetag: 27.07.1991
(51) Int. Cl.: G01G 11/08, G01G 13/10

(54) **Gravimetrische Dosiervorrichtung für Schüttgüter**
Gravimetric dosing device for bulk materials
Dispositif pour le dosage de matériaux en vrac

(30) Priorität: 17.08.1990 DE 4026042
(43) Veröffentlichungstag der Anmeldung: 19.02.1992
(73) Patentinhaber: Pfister GmbH, 86165 Augsburg (DE)
(72) Erfinder: Häfner, Hans Wilhelm, W-8890 Aichach-Walchshofen (DE)
(74) Vertreter: Kahler, Kurt, Dipl.-Ing.

(56) Entgegenhaltungen:
- EP-A- 0 198 956
- EP-A- 0 292 723
- DE-A- 3 146 593
- FR-A- 2 526 541
- US-A- 3 908 773

## Beschreibung

Die Erfindung betrifft eine gravimetrische Dosiervorrichtung für Schüttgüter, ein Verfahren zu deren Betrieb sowie eine Anlage, in der eine derartige Dosiervorrichtung eingesetzt wird.

Aus der DE-PS 32 17 406 ist eine Vorrichtung zum kontinuierlichen gravimetrischen Dosieren von schüttfähigem Gut bekannt, das über eine Aufgabeöffnung in Taschen eines in einem Gehäuse angeordneten, sich um eine im wesentlichen vertikale Achse drehbaren Rotors geleitet und über eine zur Aufgabeöffnung in Drehrichtung des Rotors versetzte Entleerungsöffnung entnommen wird, wobei das Gehäuse schwenkbar um eine im wesentlichen horizontale Achse gelagert und mit einer entfernt von dieser Achse angeordneten Kraftmeßvorrichtung verbunden ist. Dabei ist ein pneumatisches Fördersystem zum Zuführen von Druckluft zu einer der Entleerungsöffnung gegenüberliegenden Öffnung vorgesehen. Elastische Anschlußglieder entkuppeln die Vorrichtung von den Leitungen des pneumatischen Fördersystems und der Schüttgutzuführung.

Eine derartige gravimetrische Dosiervorrichtung arbeitet äußerst zufriedenstellend und auch langzeitig genau. Aufgrund der pneumatischen Förderung muß sie jedoch sehr stabil aufgebaut sein, was sich insbesondere bei sehr großen Fördermengen nachteilig bemerkbar macht. Gewisse Schwierigkeiten bereiten auch Schüttgüter, die zum Zusammenbacken neigen, wie etwa Zementrohmehl.

Derartiges Zementrohmehl wird beispielsweise in großen Anlagen von einem Silo mit einer Fördermenge von 100 bis 300 t/h dadurch in gravimetrisch dosierbaren Mengen einem Wärmetauscher zugeführt, daß das Schüttgut über eine Förderrinne auf eine Dosierbandwaage geleitet wird. Die Förderrinne ist geneigt und besitzt unter einem porösen Boden einen Druckraum, aus dem Luft fein verteilt in das durch die Förderrinne laufende Schüttgut geblasen wird, so daß dieses fließfähig wird. Nachteilig bei einer derartigen Verwendung von Dosierbandwaagen ist die Tatsache, daß es sich um ein offenes System handelt, das nicht schüttgutgerecht ist. Es müssen Verkleidungen vorgesehen sein und Umweltgesichtspunkte sind zu beachten. Weiterhin zeigen die DE-A1-3146593 eine belüftete Dosier schnecke und die US-A-3908773 einen am Boden porös ausgebildeten Schüttgutbehälten.

Der Erfindung liegt deshalb die Aufgabe zugrunde, eine gravimetrische Dosiervorrichtung anzugeben, die in großen Mengen auch an sich wenig fließfähiges Schüttgut in einem geschlossenen System verarbeiten kann. Ferner soll ein eine gravimetrische Dosiervorrichtung verwendendes Dosierverfahren und eine derartiges Schüttgut transportierende und zu messende Förderanlage angegeben werden.

Die erfindungsgemäße gravimetrische Dosiervorrichtung besitzt die Merkmale des Patentanspruches 1, das genannte Verfahren ist im Patentanspruch 9 und die erfindungsgemäße Anlage in Patentanspruch 4 gekennzeichnet.

Bevorzugte Weiterbildungen der Erfindung lassen sich aus den übrigen Ansprüchen entnehmen.

Weitere Merkmale und Vorteile der Erfindung ergeben sich aus der nachstehenden Beschreibung eines Ausführungsbeispieles unter Bezugnahme auf die Zeichnungen. Es zeigen
- Fig. 1: eine schematische Seitenansicht teilweise im Schnitt einer eine erfindungsgemäße gravimetrische Dosiervorrichtung verwendenden Schüttgutförderanlage
- Fig. 2: eine Seitenansicht ähnlich der gemäß Fig. 1 zur Erläuterung der Lagerung der gravimetrischen Dosiervorrichtung und der Anordnung der Meßvorrichtung
- Fig. 3: eine schematische Seitenansicht der Anlage gegenüber der Fig. 2 um 90° versetzt und
- Fig. 4: eine Draufsicht auf die Anlage in schematischer Darstellung.

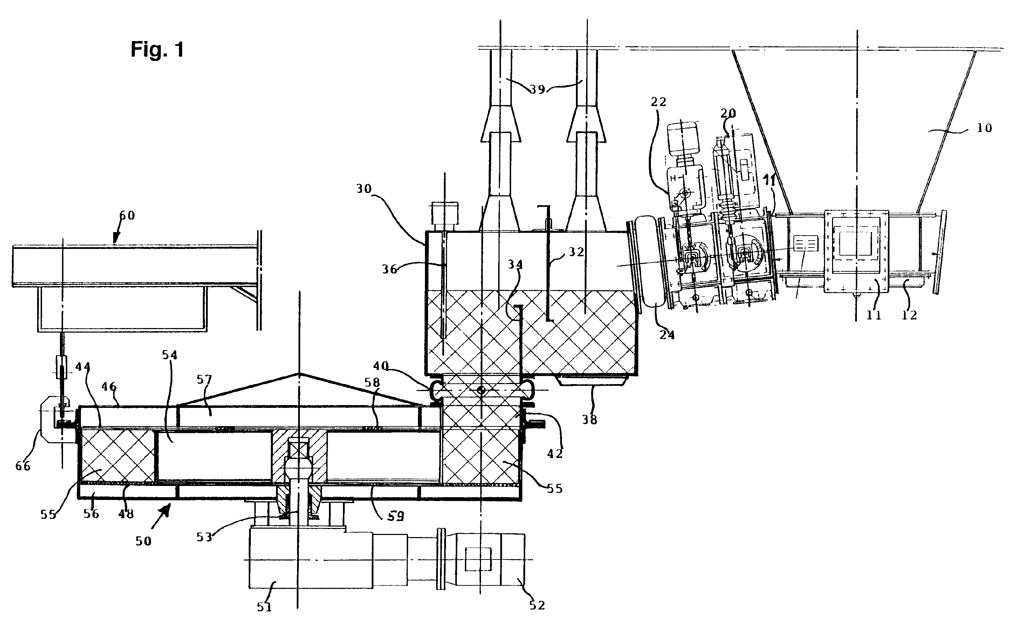

Die Fig. 1 zeigt den prinzipiellen Aufbau eines bevorzugten Ausführungsbeispiels einer Großmengenförder- und Dosieranlage, wie sie beispielsweise zur Förderung von Zementrohmehl zu einem nicht gezeigten Wärmetauscher verwendet werden kann.

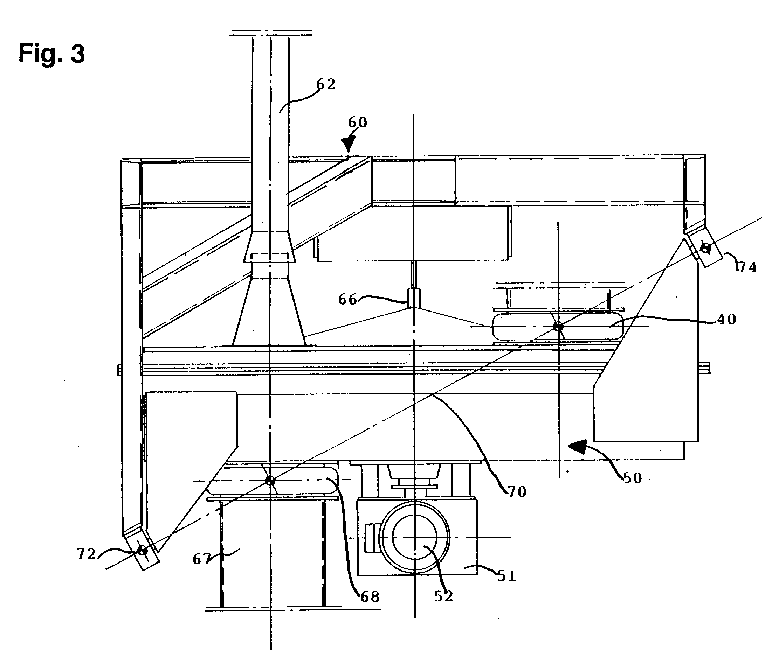

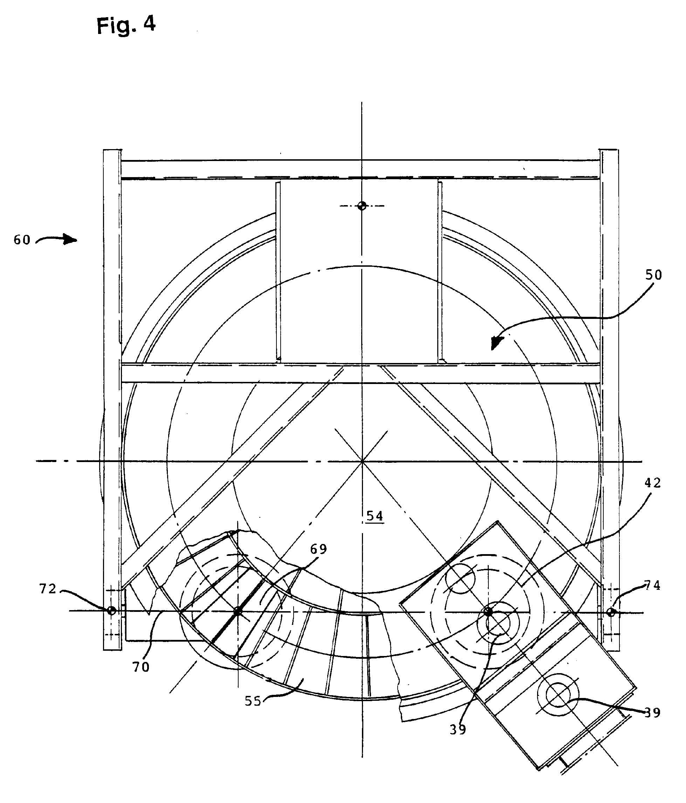

Aus einem Silo oder Lagerbunker 10 wird über eine der Öffnungen 11, geeignete Absperr- und Dosiervorrichtungen 20, 22 das Schüttgut über einen Kompensator 24 in einen Beruhigungsbehälter 30 geleitet, aus dem es über einen zweiten Kompensator 40 in die gravimetrische Dosiervorrichtung 50 gelangt, deren Einfüllöffnung 42 umfangsmäßig versetzt ist bezüglich der Entleerungsöffnung 69 (Fig. 4), durch die das Schüttgut in die Abführleitung 67 (Fig. 3) gelangt.

Der Aufbau der gravimetrischen Dosiervorrichtung 50 entspricht im Prinzip demjenigen wie er in der DE-PS 32 17 406 beschrieben ist, wobei jedoch erfindungswesentliche Abänderungen vorgenommen wurden. Der bekannte Aufbau wird deshalb hier nur kurz erläutert.

In einem im wesentlichen geschlossenen Gehäuse 46 läuft ein Rotor 44 unter Antrieb durch einen Motor 52, ein Getriebe 51 und die Welle 53 kontinuierlich um. Der Rotor 44 besitzt einen im wesentlichen geschlossenen Innenraum 54, um den fächerartig Taschen 55 ausgebildet sind, die in Abweichung vom Rotor gemäß der genannten deutschen Patentschrift bevorzugt umfangsmäßig geöffnet sein können. Wesentlich für die Erfindung ist die Ausbildung eines Druckraumes unterhalb des Rotors 44 zumindest unterhalb dessen Taschen 55, wobei dieser Druckraum 56 nach oben hin eine poröse Wand 48 etwa in Form eines Metallgewebes aufweist, so daß aus dem ständig mit Druckluft versorgten Druckraum 56 Luft fein verteilt durch das Gewebe 48 in die Taschen 55 geblasen wird, was zu einer Fluidisierung des Schüttgutes in diesen Taschen führt. Hierdurch wird somit die Fließfähigkeit des Schüttgutes erhöht und ein Zusammenbacken von Schüttgutteilchen wird erheblich reduziert.

Da sich, wie aus der genannten deutschen Patentschrift bekannt, Schüttgut in den Taschen 55 des Rotors 44 nur im Bereich zwischen der Füllöffnung 42 und der Entleerungsöffnung 69 befindet, kann sich der poröse Boden 48 und ggf. auch der Druckraum 56 auf diesen Bereich beschränken. Andererseits wird bei voller Ausdehnung dieser Vorrichtung Luft in die leeren Taschen 55 geblasen, wobei ggf. hängengebliebenes Schüttgut aufgewirbelt wird.

Damit sich zwischen der Deckwand bzw. Bodenwand des Rotorinnenraumes 54 und den diesen gegenüberliegenden parallelen Gehäusewänden kein Schüttgutstaub ansammelt, sind bevorzugt vom Druckraum 56 bzw. von einem oberen Druckraum 57 aus Düsen 59 bzw. 58 vorgesehen, durch die Luft in Richtung der genannten Deck- bzw. Bodenwand geblasen wird. Hierdurch entsteht ein Überdruck in radialer Richtung, so daß jeglicher Schüttgutstaub in die Taschen 55 geblasen wird.

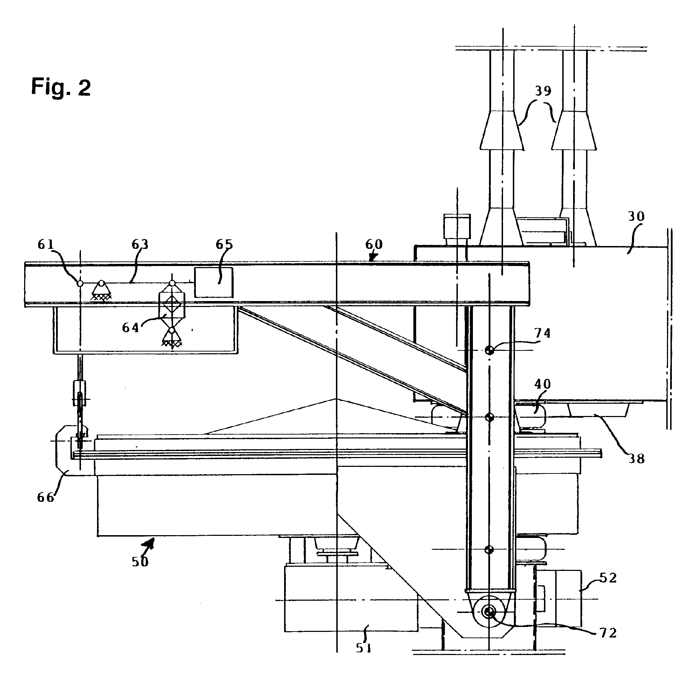

Wie in der genannten deutschen Patentschrift näher beschrieben, erfolgt die gravimetrische Dosierung mittels der Vorrichtung 50 dadurch, daß letztere mit Abstand zum Rotationsmittelpunkt um eine Achse 70 in Lagern 72, 74 schwenkbar in einem Gestell 60 aufgehängt ist, wobei die Vorrichtung 50 auf der der Achse 70 gegenüberliegenden Seite etwa mittels eines Hakens 66 (Fig. 1 und 2) an einem Punkt 61 angelenkt ist, an dem eine Kraftmeßzelle 64 wirkt. Ein Tariergewicht 65 kann zum Ausgleich des Leergewichtes der Vorrichtung 50 entsprechend verstellbar an dem Wiegebalken 63 angebracht sein (Fig. 2).

Es wird nochmals auf die genannte deutsche Patentschrift verwiesen, bei der zur Vermeidung von Verwindungskräften in den Verbindungen am Eingang und Ausgang der Dosiervorrichtung 50 die waagerechte Schwenkachse (entsprechend der Schwenkachse 70) durch den Kompensator an der Aufgabestation und mindestens einen weiteren Kompensator an der Entleerungsstation verläuft. Nachteilig hierbei ist, daß das Schüttgut mittels Druckluft aus dem Rotor nach oben geblasen werden muß.

Gemäß einem allgemeinen Merkmal der vorliegenden Erfindung wird nun die Schwenkachse 70 nicht mehr waagerecht gelegt, sondern derart schräg, daß sie durch die Mitte des oberen Kompensators 40 an der Einfüllstation und durch die Mitte des unteren Kompensators 68 an der Entleerungsstation verläuft. Je nach Durchmesser des Rotors 44 kann dabei der Winkel der Achse 70 gegenüber der Horizontalen abhängig von den Dimensionen des Rotors und seines Gehäuses in einem Bereich von 10 bis 45° bevorzugt im Bereich von 25 bis 35, insbesondere bei etwa 30° liegen. Hierbei kann die Verbindung zwischen den Haken 66 und dem Anlenkpunkt 61 nach wie vor senkrecht verlaufen, wobei dann die in dieser Richtung gemessene Kraftkomponente entsprechend auf die Gesamtkraft umgerechnet oder eine entsprechende Kalibrierung vorgenommen wird.

Wie aus den Figuren 3 und 4 ersichtlich, ist der Entleerungsöffnung 69 gegenüberliegend durch die Oberseite des Gehäuses ein Absaugrohr 62 vorgesehen, durch das der in den Taschen 55 erzeugte Überdruck abgebaut wird, was die Befüllung der leeren Taschen 55 fördert.

Aus der vorangehenden Beschreibung ergibt sich eine neuartige gravimetrische Dosiervorrichtung, die auch für weniger fließfähiges Schüttgut geeignet ist, die aufgrund der besonderen Schwenkachsenführung eine erhöhte Genauigkeit aufweist und keine Druckstabilität besitzen muß, da das Schüttgut nicht pneumatisch abgefördert wird. Eine derartige gravimetrische Dosiervorrichtung ist allgemein verwendbar; sie soll jedoch gemäß dem bevorzugten Ausführungsbeispiel im Zusammenhang mit einer Massengutförderanlage zum Einsatz kommen. In diesem Zusammenhang ist gemäß Fig. 1 die Ausbildung des Beruhigungsbehälters 30 von Bedeutung, der wie das Gehäuse 46 der Vorrichtung 50 ebenfalls einen Bodendruckraum 38 unter einem porösen Boden aufweist, so daß wiederum in das in dem Beruhigungsbehälter 30 befindliche Schüttgut fein verteilt Luft eingeblasen und die Fließfähigkeit wesentlich verbessert wird. Als besondere Beruhigungsmaßnahme ist im Behälter 30 ein Syphon (Wände 32/34) vorgesehen, so daß das in den rechten Teil (Fig. 1 des Beruhigungsbehälters 30) gelangende und durch den Luftstrom aufgewirbelte Gut beruhigt in den linken Bereich gelangt, von dem es direkt im freien Fall durch den Kompensator 40 den Einfüllstutzen 42 zur Vorrichtung 50 erreicht. Ein Pegelstandsmesser 36 beispielsweise in Form eines Schwimmers stellt den jeweiligen Pegel an Schüttgut im Beruhigungsbehälter 30 fest, wobei der gemessene Wert zur Regelung in der Dosiervorrichtung 22 verwendbar ist, um den gewünschten Pegel einzuhalten. Eine Grobeinstellung der Regelung der Dosiervorrichtung 22 erfolgt abhängig von der gewählten Solldrehzahl des Rotors 44 bzw. seines Motors 52.

Wie aus Fig. 1 ersichtlich, kann zwischen dem Silo 10 und das Dosierventil 22, das bevorzugt ein Dosierwalzenventil ist, ein etwa handbetätigtes Absperrventil 20 eingesetzt sein. Auch an der Unterseite des Silos 10 kann bevorzugt ein Druckraum 12 mit porösem Boden zum Silo 10 hin angeordnet werden, um bereits dort die Fließfähigkeit des Schüttgutes zu fördern. In diesem Zusammenhang sei darauf hingewiesen, daß bei entsprechender Kombination der Ausgestaltung des unteren Bereichs des Silos 10 und des Beruhigungsbunkers 30 letzterer auch wegfallen kann und eine Förderung direkt vom Silo 10 erfolgt.

Ähnlich der Absaugleitung 62 (Fig. 3) an der Entleerungsstation können auch entsprechende Absaugrohre 39 (rechts und links) für den Beruhigungsbehälter 30 vorgesehen sein, so daß kein wesentlicher Überdruck entsteht.

Obwohl bei dem bevorzugten Ausführungsbeispiel der erfindungsgemäßen Anlage eine besonders bevorzugte Ausbildung einer gravimetrischen Dosiervorrichtung 50 ähnlich derjenigen gemäß der genannten deutschen Patentschrift beschrieben wurde, sind ähnliche Dosiervorrichtungen etwa diejenige gemäß US-PS 4,336,851 bzw. DE-AS 23 12 129 ebenfalls anwendbar, wenn bei ihnen in entsprechender Weise ein Druckraum über eine poröse Wand mit dem Förderraum der Dosiervorrichtung vorgesehen werden kann.

## Patentansprüche

1. Gravimetrische Dosiervorrichtung (50) für Schüttgut mit einer Meßstrecke, durch die das Schüttgut unter Massenfeststellung kontinuierlich geleitet wird, wobei die Meßstrecke eine poröse Wand (48) besitzt, durch die ständig ein Fluid,
insbesondere Luft eingeblasen wird,
dadurch gekennzeichnet, daß
die Meßstrecke einen zwischen zwei parallelen Wänden eines Gehäuses (46) umlaufenden, mit radialen Taschen (55) versehenen Rotor (44) aufweist, wobei die untere Wand zumindest im Bereich der Taschen (55) porös (48) ausgebildet ist und sich darunter ein Druckraum (56) befindet, sowie in der unteren Wand zur Mitte des Rotors (44) hin zumindest ein weiterer durchlässiger Bereich in Form von Düsen (59) ausgebildet ist, durch die Fluid zwischen den Rotor (44) und die untere Wand in Richtung zu den Taschen drückbar ist und/oder an der oberen Wand ein Druckraum (57) vorgesehen ist, mit durchlässigen Bereichen zur Mitte des Rotors (44) hin in Form von Düsen (58), durch die Fluid in den Zwischenraum zwischen der oberen Wand und dem Rotor (44) in Richtung zu den Taschen (55) drückbar ist.

2. Dosiervorrichtung nach Anspruch 1,
dadurch gekennzeichnet, daß
das Gehäuse (46) an einem Gerüst (60) um eine in Abstand von der Rotormitte verlaufende Achse (70) schwenkbar ist, während es auf der gegenüberliegenden Seite mit einer Kraftmeßvorrichtung (61,63-65) verbunden ist.

3. Dosiervorrichtung nach Anspruch 2,
dadurch gekennzeichnet, daß
die horizontal oder unter einem Winkel gegenüber der Horizontalen verlaufende ein- oder beidseitig gelagerte Achse (70) durch die Mitte eines an einem Einfüllstutzen (42) angeordneten Kompensators (40) und die Mitte eines auf der Unterseite des Gehäuses (46) versetzt zum Einfüllstutzen (42) angeordneten Kompensators (68) an einer Entleerungsstelle (69) verläuft, und an oder nach der Entleerungsstation (69) nach oben hin ein Absaugrohr (62) im Bereich über den Rotortaschen (55) angeordnet ist.

4. Anlage zur Förderung von Schüttgut unter Verwendung einer gravimetrischen Dosiervorrichtung nach einem der vorhergehenden Ansprüche, wobei
an einer Einfüllstation (42) ein Schüttgutbehälter (30) angeordnet ist, bei dem zumindest ein Bereich des Bodens porös ausgebildet und darunter eine Druckkammer (38) angeordnet ist,
dadurch gekennzeichnet, daß
in dem Behälter (30) ein Beruhigungssyphon (32/34) angeordnet ist und eine Pegelmeßvorrichtung (36) vorgesehen ist, deren Ausgangswert zur Regelung der Schüttguthöhe in dem Behälter (30) dient.

5. Anlage nach Anspruch 4,
dadurch gekennzeichnet, daß
im oberen Bereich des Behälters (30) zumindest ein Absaugrohr (39), vorzugsweise jedoch je ein Absaugrohr (39) am Eingangsbereich bzw. Ausgangsbereich des Beruhigungssyphons (32/34) vorgesehen ist.

6. Anlage nach Anspruch 4 oder 5,
dadurch gekennzeichnet, daß
dem Behälter (30) eine volumetrische Schüttgutdosiervorrichtung (22) über einen weiteren Kompensator (24) vorgeschaltet ist, deren Durchlaßmenge abhängig von der Drehzahl des Rotors (44), als Grobregelwert und/oder dem Ausgangswert der Pegelmeßvorrichtung (36) regelbar ist.

7. Anlage nach einem der Ansprüche 4 bis 6,
dadurch gekennzeichnet, daß
der Behälter (30) von einem Speicher (10) gespeist wird, dessen unterer Bereich einem feinverteilten Luftstrom ausgesetzt ist.

8. Anlage nach einem der Ansprüche 4 bis 7,
dadurch gekennzeichnet, daß
die Abförderung des dosierten Schüttgutes in einem geschlossenen System erfolgt.

9. Verfahren zum gravimetrischen Dosieren von Schüttgut in einer kontinuierlich beschickten Meßstrecke, die von ihrer Unterseite her mit einem fein verteilten kontinuierlichen Fluidstrom beschickt wird, der auch in Richtung einer Deck-bzw. Bodenwand des Rotorinnenraumes einer rotierenden Dosiervorrichtung (50) mit Fördertaschen (55) geblasen wird,
dadurch gekennzeichnet, daß
zwischen einer Gehäusewand und einer Deck-bzw. Bodenwand des Rotorinnenraumes Fluid unter Überdruck radial vom Zentrum nach außen geblasen wird.

## Claims

1. A gravimetric dosing device (50) for bulk material, comprising a measuring path through which the bulk material is continuously passed in a mass detection condition, the measuring path including a porous wall (48) through which a fluid, in particular air, is permanently blown in,
characterized in that
the measuring path comprises a rotor (44) being provided with radial pockets (55) and rotating between two parallel walls of a housing (46), the bottom wall thereof being porous (48) at least in a region covered by said pockets (55), and having arranged thereunder a pressurized air space (56), and at least one further porous region in the form of nozzles (59) being formed in the bottom wall in a centripetal direction of said rotor (44), which nozzles (59) are adapted to allow a fluid to be pressed therethrough and between said rotor (44) and said bottom wall in a direction to said pockets, and/or the top wall thereof being provided with a pressurized air space (57) including porous regions formed as nozzles (58) in a centripetal direction of said rotor (44) and adapted to allow a fluid to be pressed therethrough and into the gap between said top wall and said rotor (44) in a direction to said pockets (55).

2. The dosing device of claim 1, characterized in that said housing (46) supported at a frame (60) is pivotable about an axis (70) extending in a distance from the rotor center, while the opposite surface of said housing (46) is connected to a force measuring device (61, 63-65).

3. The dosing device of claim 2, characterized in that said one- or two-side-supported axis (70) extending in a horizontal or angular direction of the horizontal traverses the center of a compensator (40) arranged at a charging inlet (42) and traverses the center of a compensator (68) arranged at the bottom surface of said housing (46) at a discharging outlet (69) in an offset manner in respect of said charging inlet (42), and that at or after said discharging station (69) in the portion above said rotor pockets (55) a suction tube (62) is arranged in an upward direction.

4. A system for conveying bulk material, using a gravimetric dosing device of any of the preceding claims, wherein a container (30) for bulk material is arranged at a charging station (42), with at least a portion of the bottom of said container (30) being formed to be porous, and having arranged thereunder a pressure chamber (38),
characterized in that
said container (30) accommodates an abating syphon (32/34) and is provided with a level detection means (36), the output value of which serves for controlling the level of bulk material in said container (30).

5. The system of claim 4, characterized in that said container (30) is provided in its upper portion with at least one suction duct (39), but preferably with a suction duct (39) each at the inlet portion or outlet portion, respectively, of said abating syphon (32/34).

6. The system of either claim 4 or claim 5, characterized in that in an upstream direction of said container (30) there is arranged a volumetric metering device (22) for bulk material via a further compensator (24), the flow rate of said device (22) being controllable depending on the rotational speed of said rotor (44), as a coarse control value and/or depending on the output value of said level detection means (36).

7. The system of any of claims 4 to 6, characterized in that said container (30) is supplied by a bin (10) having its bottom portion exposed to a finely distributed air stream.

8. The system of any of claims 4 to 7, characterized in that the discharging of the metered bulk material is performed in a closed system.

9. A method for the gravimetric metering of bulk material in a continuously supplied measuring path supplied from its bottom surface with a finely distributed continuous fluid stream also being blown in a direction of a top wall or bottom wall, respectively, of the rotor interior of a rotating dosing device (50) comprising conveying pockets (55),
characterized in that
between a housing wall and a top wall or bottom wall, respectively, of the rotor interior a fluid is blown under positive pressure in a radial direction from the center to the periphery thereof.

## Revendications

1. Dispositif de dosage gravimétrique (50) de matériau en vrac, avec une section de mesure à travers laquelle le matériau en vrac est dirigé en continu en déterminant sa masse, la section de mesure possédant une paroi poreuse (48) à travers laquelle un fluide, notamment de l'air, est insufflé en permanence, **caractérisé** en ce que la section de mesure présente un rotor (44) tournant entre deux parois parallèles d'un carter (46) et pourvu de poches radiales (55), la paroi inférieure étant réalisée poreuse (48) au moins dans la région des poches (55) et une chambre de pression (56) se trouvant en dessous, et au moins une autre région perméable vers le milieu du rotor (44) étant configurée dans la paroi inférieure, sous la forme de buses (59) par lesquelles du fluide peut être envoyé sous pression entre le rotor (44) et la paroi inférieure, en direction des poches, et/ou une chambre de pression (57) étant prévue sur la paroi supérieure, avec des régions perméables vers le milieu du rotor (44) sous la forme de buses (58) par lesquelles du fluide peut être envoyé sous pression dans l'espace intermédiaire entre la paroi supérieure et le rotor (44), en direction des poches (55).

2. Dispositif de dosage selon la revendication 1, **caractérisé** en ce que le carter (46) est pivotant sur un bâti (60) autour d'un axe (70) s'étendant à distance du milieu du rotor, tandis qu'il est relié, sur le côté opposé, à un dispositif dynamométrique (61, 63-65).

3. Dispositif de dosage selon la revendication 2, **caractérisé** en ce que l'axe (70), monté sur paliers d'un côté ou des deux côtés et s'étendant horizontalement ou sous un angle par rapport à l'horizontale, passe par le milieu d'un compensateur (40) disposé sur une tubulure de remplissage (42) et par le milieu d'un compensateur (68) disposé sur le dessous du carter (46) en décalage par rapport à la tubulure de remplissage (42), à un poste de vidage (69), et un tube (62) d'évacuation par aspiration étant disposé sur ou après le poste de vidage (69), dans la région située au-dessus des poches (55) du rotor et en étant dirigé vers le haut.

4. Installation pour le transport de matériau en vrac en utilisant un dispositif de dosage gravimétrique selon l'une des revendications précédentes, un récipient (30) de matériau en vrac étant disposé à un poste de remplissage (42), au moins une région du fond du récipient étant réalisée poreuse et une chambre de pression (38) étant disposée en dessous, **caractérisée** en ce qu'un siphon de stabilisation (32/34) est disposé dans le récipient (30), et il est prévu un dispositif de mesure de niveau (36) dont la valeur initiale sert à réguler la hauteur de matériau en vrac dans le récipient (30).

5. Installation selon la revendication 4, **caractérisée** en ce qu'au moins un tube (39) d'évacuation par aspiration est prévu dans la région supérieure du récipient (30), et de préférence toutefois un tube respectif (39) d'évacuation par aspiration dans la région d'entrée et dans la région de sortie du siphon de stabilisation (32/34).

6. Installation selon la revendication 4 ou 5, **caractérisée** en ce que le récipient (30) est précédé d'un dispositif de dosage volumétrique (22) de matériau en vrac avec intercalation d'un compensateur supplémentaire (24), dont le débit de passage peut être régulé en fonction de la vitesse de rotation du rotor (44) comme valeur de réglage grossier, et/ou de la valeur initiale du dispositif de mesure de niveau (36).

7. Installation selon l'une des revendications 4 à 6, **caractérisée** en ce que le récipient (30) est alimenté par un silo (10) dont la région inférieure est exposée à un flux d'air finement réparti.

8. Installation selon l'une des revendications 4 à 7, **caractérisée** en ce que le transport d'évacuation du matériau en vrac dosé s'effectue dans un système fermé.

9. Procédé pour le dosage gravimétrique de matériau en vrac dans une section de mesure alimentée en continu, qui reçoit depuis sa face inférieure un flux continu et finement réparti de fluide qui est également insufflé en direction d'une paroi de recouvrement et/ou d'une paroi de fond de l'espace intérieur de rotor d'un dispositif de dosage rotatif (50) avec des poches de transport (55), **caractérisé** en ce que du fluide est insufflé en surpression, radialement depuis le centre vers l'extérieur, entre une paroi de carter et une paroi de recouvrement et/ou une paroi de fond de l'espace intérieur du rotor.
